# EUROPEAN PATENT SPECIFICATION

(11) **EP 0 982 093 B1**
(45) Date of publication and mention of the grant of the patent: **10.05.2006**
(21) Application number: 98850133.4
(22) Date of filing: 24.08.1998
(51) Int. Cl.: B23D 61/12, B23D 61/02

(54) **Saw blade and tooth configuration**
Sägeblatt und seine Zahnkonfiguration
Lame de scie et sa configuration de dents de scie

(43) Date of publication of application: 01.03.2000
(73) Proprietor: Hakansson, Bengt Erik William, 662 36 Amal (SE); Hakansson, Bengt Emanuel Hakan, 66230 Amal (SE)
(72) Inventor: Hakansson, Bengt Erik William, 662 36 Amal (SE); Hakansson, Bengt Emanuel Hakan, 66230 Amal (SE)
(74) Representative: Johansson, Lars-Erik

(56) References cited:
- WO-A-94/26451
- WO-A-96/05931
- US-A- 1 649 864

## Description

### TECHNICAL FIELD

The invention concerns a band saw blade with teeth having a tooth point with a tooth edge, a tooth face on the front side of the tooth as viewed in the direction of sawing, a tooth back behind the tooth edge, and a tooth bottom between the tooth face on each tooth and the tooth back on the next tooth in front of said each tooth, and tooth gullets, wherein a tooth gullet is defined as the space between the tooth edges of two adjacent teeth, said saw blade having two planar sides; a right hand side and a left hand side when the saw blade is viewed obliquely from above in the direction of sawing, wherein said tooth edge extends between a right hand tooth corner and a left hand tooth corner with reference to said viewing direction.

### BACKGROUND OF THE INVENTION

Knives and saws are conventionally used for dividing materials, whatever the material may be. While a knife blade works like a wedge dividing the material without any formation of chips, the saw teeth work as tiny planing tools generating chips by planing and/or tearing, the chips being collected and removed in the tooth gullets. The development of increasingly efficient saws has aimed at further developing this planing and/or tearing function of saw blades. It is also a typical feature of saw blades that they due to their milling away material will form a kerf, which is at least as wide as the gauge (thickness) of the saw blade. In order that conventionally designed saw blades shall not fasten, the teeth are set or swaged, so that the kerf will be somewhat wider than the blade is thick.

It is also typical for conventional saw blades, whether it is the question of band saw blades, circular saw blades, or saw blades on rip saws, log saws, or other reciprocating saw blades which are powered manually or mechanically, that they vibrate and give rise to noise at a volume which in many cases can be uncomfortably high. Further, the surfaces of the kerfs will be grooved or otherwise uneven, which requires considerable finishing in those cases when smooth surfaces are desired. Among other drawbacks can be mentioned that setting and swaging cause wide kerfs and hence substantial losses of material.
The document US-A-1 649 864 discloses which a band saw blade (page 3, line 11) within a region of a first tooth gullet between the tooth edge of a first tooth and the tooth edge of the next tooth in front of said first tooth is bevelled such that the saw blade surface within said region slopes towards the left hand side of the saw blade forming an obtuse angle with said left hand side, said bevelled region with said sloping surface extending from a first tooth edge in the rear end of the first tooth gullet, downwards the tooth face, said region being bordered to the right by a first line which extends from a rear foot point defined by the right hand tooth corner on the first tooth edge to a front foot point which borders on the left hand side of the saw blade in the region of the first tooth gullet, to the left by the border line against the left planar side of the saw blade, and forwards by said first line. Further the saw blade, within a region of a second tooth gullet between a second tooth and a next tooth in front of said second tooth is bevelled in the same way as in the first tooth gullet but instead to the right and
WO-A-94/26451 shows a saw blade with teeth and sideways bevelled tooth gullets.

### BRIEF DISCLOSURE OF THE INVENTION

It is the purpose of the invention to provide a saw blade which saws very silently, which does not give rise to inconvenient vibrations, which gives surfaces having a good smoothness and thin, material-saving kerfs when sawing in e.g. wood, plastic, meat, frozen victuals, and metal.

Surprisingly, these effects can be achieved with a band saw blade In accordance with claim 1 Along the border line between said bevelled region and the right hand side of the blade there is thus formed a longitudinal edge, like the edge of a knife, along the profile of the tooth face of the first tooth and of the tooth back of the next tooth. Within the region of the next tooth gullet, the saw blade is bevelled in a corresponding way, but instead with the bevelled region sloping to the right, so that the longitudinal edge in this case coincides with the profile of the tooth gullet on the left hand side of the blade. A saw blade designed in this way, wherein the saw blade in the region of the tooth gullets following directly upon one another are bevelled alternatingly to the left and to the right, has turned out not to require any setting or swaging of the teeth in order to run freely in the kerf that is being established. The sawing is extremely easy to perform, without noticeable vibration, and very silent and gives cuts with good surface smoothness when sawing in for example wood, plastics, and metal. Without binding the invention to any specific theory, it can be assumed that the saw blade combines the planing operation of the teeth with the operation of tools which cut like knives.

Successful experiments have been performed with saw blades designed in the above described manner, through sawing in fresh and frozen victuals, such as meat and fish etc, and in plastic, wood and comparatively soft metals, such as brass, wherein the saw blade consisted of a conventional, hardened carbon steel. It can be assumed that the same good results can be achieved also when sawing in harder materials, such as steel and other hard metals, if at least the saw teeth, or those parts thereof which are subjected to wear, consist of more qualified materials than hardened carbon steel, such as high speed steel, Stellite or cemented carbide.

In view of the successful experiments that have been performed with a saw blade designed in the above described way, one can also conceive that substantial improvements in comparison with prior art saw blades can be achieved also when the bevelled region has a smaller extension than what has been described above. It is, however, the opinion of the inventors that the bevelled region shall extend from the tooth edge of the first tooth point in the rear end of the first tooth gullet, down the tooth face and to at least the tooth bottom. Generally speaking, it can therefore be stated tat the said region shall be bordered to the right by a first line which extends from a rear foot point defined by the right hand tooth corner of the first tooth edge or by a point on the first tooth edge, which point is nearer the right hand tooth corner than the left one, to a front foot point which borders on the left hand side of the saw blade in the region of the first tooth gullet or is a point on the tooth edge on the next tooth in front of said first tooth, to the left by the border line against the left planar side of the saw blade, and forwards by said first line and or by the tooth edge of said next tooth when the front foot point of said first line lies on said next tooth edge; that the saw blade, within a region of a second tooth gullet between a second tooth and a next tooth in front of said second tooth is bevelled in the same way as in the first tooth gullet but instead to the right, and that the saw blade within the region of first and second tooth gullets between first or second teeth, on one hand, and teeth in front thereof, on the other hand, along the length of the saw blade, are bevelled in the said way alternatingly to the left and to the right in said first and second tooth gullets.

Probably, best results are achieved if all teeth and tooth gullets are designed according to the invention, wherein the material in the region of tooth gullets following consecutively directly after one another are bevelled alternatingly to the left and to the right. The invention, however, also includes the case when the blade also has teeth that are not bevelled in the region of the tooth gullets in the said mode but in any other mode, including also conventional modes. One can also conceive that some or all teeth are set or swaged, although it is an advantage and a characteristic feature of the preferred embodiment that the saw blade is unset and unswaged.

Further characteristic features and aspects of the invention will be apparent from the appending claims and from the following description of the successfully tested embodiment and some other, conceivable embodiments.

### BRIEF DESCRIPTION OF DRAWINGS

In the following description, reference will be made to the accompanying drawings, in which
- Figs. 1 A and 1 B: show a section of a band saw blade according to the first preferred and tested embodiment in a perspective view and from the side;
- Figs. 2A, 2B, and 2C: illustrate a second, conceivable embodiment in a perspective view, from the side, and from above, respectively; and
- Figs. 3A and 3B: show a third, conceivable embodiment in a perspective view and from the side.

In the drawings, the band saw blade has been shown with strongly exaggerated thickness.

### DESCRIPTION OF EMBODIMENTS

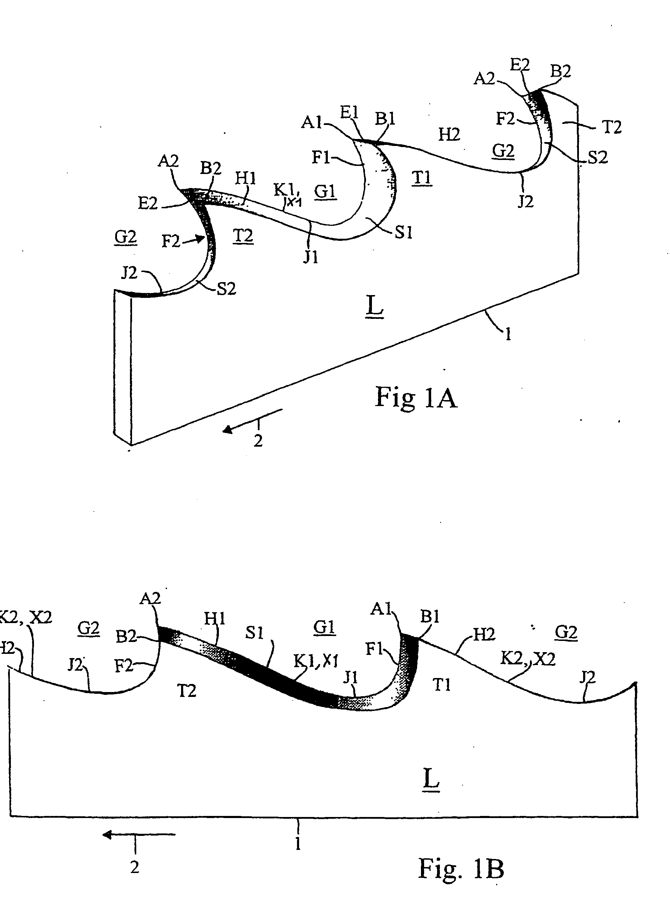

With reference first to Figs. 1 A and 1 B, there is shown a section of a band saw blade 1 according to an embodiment which, when sawing in wood, plastics, frozen and fresh victuals and in comparatively soft metals, such as brass, has turned out to give very good results, as has been mentioned in the foregoing. The sawing direction is shown by an arrow 2. The blade thickness (gauge) is strongly exaggerated. A first tooth is designated T1 and second teeth on each side of the first tooth have been designated T2. The tooth edges at the tip of the tooth points of the teeth T1 and T2 have been designated E1 and E2, respectively. The tooth edge E1 on the first tooth T1 extends obliquely over the saw blade 1 between a right hand tooth corner A1 and a left hand tooth corner B1, while the tooth edges E2 extend obliquely between a right hand tooth corner A2 and a left hand tooth corner B2. The right planar side of the blade 1, which is hidden in Figs. 1A and 1B, is denoted R, while the opposite, left hand planar side, turned towards the viewer, is designated L. A first tooth gullet between the tooth edge E1 and the tooth edge E2 in front thereof has been designated G1, while the tooth gullets in front of and at the rear of said tooth gullet G1 have been designated G2. A tooth face on the first tooth T1 in the tooth gullet G1 is designated F1. A tooth back on the tooth T2 in front thereof in the tooth gullet G1 is designated H1, while the tooth bottom in tooth gullet G1 is designated J1. Corresponding details in the tooth gullets G2 are designated F2, H2, and J2, respectively. The tooth face F1 is concave and it first extends downwards-rearwards from the edge E1 whereafter it turns forwards towards the tooth bottom J1. The tooth back H1 extends convexly upwards from the tooth bottom J1 towards the tooth edge E2 on the tooth T2 in front thereof.

According to the embodiment, the saw blade is bevelled in the region of the entire tooth gullet G1 in such a mode that the bevelled saw blade surface S1 will slope towards the left hand side L of the saw blade under an obtuse angle of about 120° with said left side, which means that the bevelled region with said sloping surface S1 will extend from the first tooth edge E1 in the rear end of the first tooth gullet G1, down the tooth face F1 and up the tooth back H1 all the way to the tooth edge E2 on the next tooth T2 in front of the first tooth. The bevelled region S1 is bordered to the right by a first line K1, which extends from the right hand tooth corner A1 of the tooth T1 to the right hand tooth corner A2 on the next tooth T2 in front of the first tooth T1. The line K1 coincides with the plane of the right hand planar side R of the blade and forms an edge line of a first longitudinal edge X1, the edge angle of which according the embodiment is about 60°. The said first longitudinal edge X1 thus has the shape of a longitudinal knife edge in the region of the entire tooth gullet G1 with an edge line K1, which follows the profile of the tooth gullet. The bevelled first region S1, which forms one side of the knife edge X1, is bordered to the left by the border line against the left hand side L of the blade, while the second knife edge side coincides with the plane of the right hand side R of the saw bade.

The saw blade 1 is bevelled in the same mode in the second tooth gullets G2, i.e. in front of and at the rear of the tooth gullet G1 but with the bevelled saw blade surfaces S2 instead sloping to the right. The longitudinal edges in the region of said second tooth gullets G2 are referred to as second knife edges and have been denoted X2.

The blade 1, along its entire length, is provided with first teeth T1 alternating with second teeth T2 in front of and at the rear of the first teeth T1 and with said first bevelled surfaces S1 sloping to the left and second bevelled surfaces S2 sloping to the right, as has been shown and described with reference to the illustrated section. The blade 1 and the teeth T1 and T2 are unset and unswaged, which implies that the tooth corners A1 and A2 and the edge lines K1 of the first longitudinal knife edges X1 will coincide with the plane of the right hand side R of the saw blade 1, and that the edge lines K2 of said second, longitudinal knife edges X2 will coincide with the plane of the left hand side L of the blade.

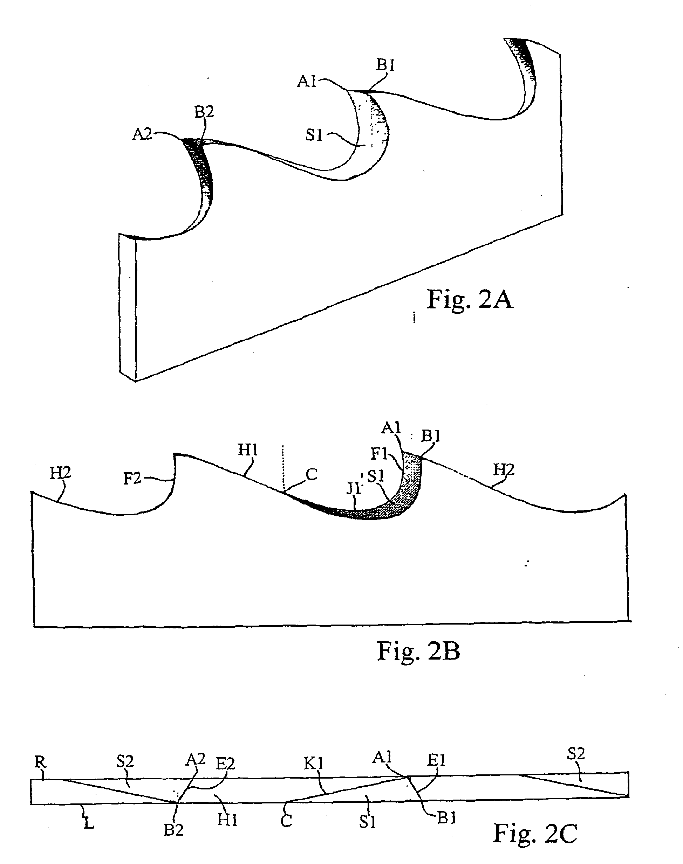

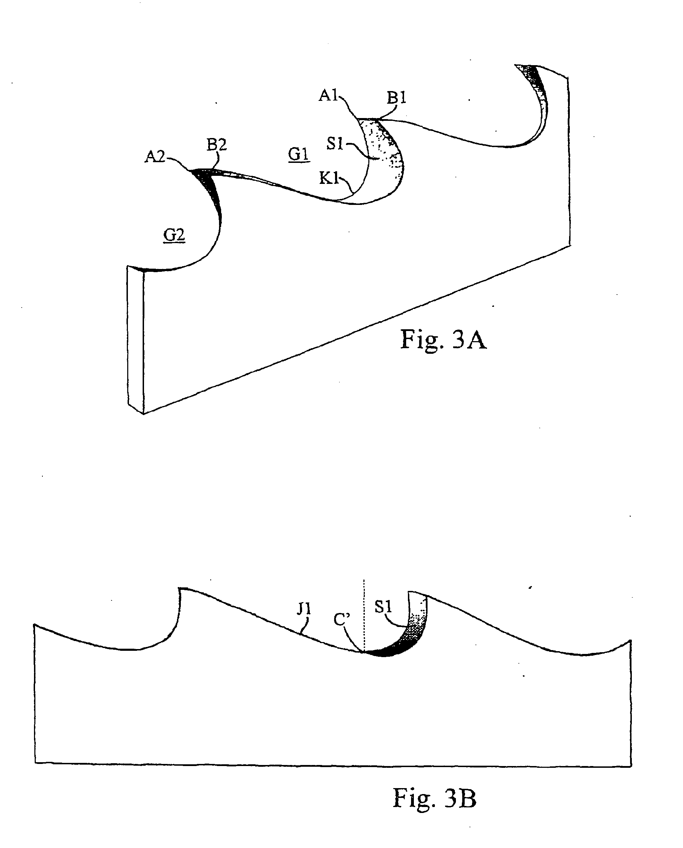

In the embodiments according to Figs. 2A - 2C and according to Figs. 3A - 3B the tooth and tooth gullet profiles have the same shape as in Figs. 1 A and 1 B, but the bevelled saw blade surfaces have a smaller extension than according to the embodiment that has been described with reference to Figs. 1 A and 1 B. In Figs. 2A - 2C a bevelled saw blade surface in the first tooth gullet has been designated S1 as above. This surface S1 is bordered at the rear by the tooth edge E1 of the first tooth T1 and to the left by the left hand saw blade surface L. To the right and forwards it is bordered by the first line K1, which in this case extends from the right hand tooth corner A1 on the tooth edge E1 to a foot point C, which borders on the left hand side of the saw blade in the region of the first tooth gullet G1 at a distance ahead of the tooth gullet J1, more particularly in the region of the tooth back H1 of the next tooth T2 in front of the first tooth. The bevelled surface S1, according to this embodiment, thus extends from the tooth edge E1, down the tooth face F1, beyond the tooth bottom J1 and a distance up the tooth back H1 on the left hand side of the blade. In the region of the second tooth gullets G2, the blade is bevelled in the corresponding mode but instead sloping to the right according to the same principle that has been described with reference to the first embodiment.

In the embodiment according to Figs. 3A and 3B, the bevelled surfaces S1 and S2 have been given a still smaller extension, comprising only the tooth face F1 and F2, respectively, wherein said first line K1 extends from the right hand tooth corner A1 to a foot point C' in the tooth bottom J1. Also in this case, every second tooth gullet is designed with the bevelled surface S1 sloping to the left and every second tooth gullet G2 designed with the bevelled surface S2 sloping to the right, i.e. mirror-invertedly with reference to the sloping bevelled surface S1, as is analogously shown in Fig. 2C for the second embodiment.

## Claims

1. A band saw blade with teeth having a tooth point with a tooth edge (E1, E2), a tooth face on the front side of the tooth as viewed in the direction of sawing, a tooth back behind the tooth edge, and a tooth bottom between the tooth face on each tooth and the tooth back on the next tooth in front of said each tooth, and tooth gullets, wherein a tooth gullet (G1, G2) is defined as the space between the tooth edges of two adjacent teeth, said saw blade having two planar sides; a right hand side (R) and a left hand side (L) when the saw blade is viewed obliquely from above in the direction of sawing,
wherein said tooth edge (E1, E2) extends between a right hand tooth corner (A1, A2) and a left hand tooth corner (B1, B2) with reference to said viewing direction,
wherein
the saw blade within a region of a first tooth gullet between the tooth edge (E1) of a first tooth (T1) and the tooth edge (E2) of the next tooth (T2) in front of said first tooth is bevelled at an obtuse angle towards the left hand side (L) of the saw blade, forming a bevelled region with a sloping surface (S1),
said bevelled region with said sloping surface (S1) extending from a first tooth edge (E1) in the rear end of the first tooth gullet, downwards the tooth face and to at least the tooth bottom,
said region being bordered to the right by a first line (K1) which extends from a rear foot point defined by the right hand tooth corner (A1) on the first tooth edge (E1) or by a point (A1') on the first tooth edge, which point is nearer the right hand tooth corner (A1) than the left one (B1), to a front foot point (C, C') which borders on the left hand side of the saw blade in the region of the first tooth gullet or is a point on the tooth edge (E2) on the next tooth (T2) in front of said first tooth, thereby forming a first longitudinal knife edge (X1) starting from the rear foot point,
and said region being bordered to the left by the border line against the left planar side of the saw blade, and forwards by said first line (K1) and /or by the tooth edge (E2) of said next tooth (T2) when the front foot point of said first line lies on said next tooth edge;
that the saw blade, within a region of a second tooth gullet (G2) between a second tooth and a next tooth in front of said second tooth is bevelled in the same way as in the first tooth gullet but instead to the right, thereby forming a second longitudinal knife edge (X2) starting from the rear foot point,
and that the saw blade within the region of first and second tooth gullets between first or second teeth, on one hand, and teeth in front thereof, on the other hand, along the length of the saw blade are bevelled in the said mode alternatingly to the left and to the right in said first and second tooth gullets.

2. A saw blade according to any of claim 1, **characterized in that** the tooth faces (F1, F2) are concave, and that the tooth backs (H1, H2) in said first and second tooth gullets are convex and the tooth edge (E1, E2) lies in front of the rearest point of the concave tooth face (F1, F2).

3. A saw blade according to claim 1, **characterized in that** the obtuse angle of the bevelled saw blade surface with the side of the saw blade is between 105° and 145°, preferably between 110° and 130°, and suitably about 120°.

4. A saw blade according to claim 3, **characterized in that** the edge angle of the longitudinal edge is between 45° and 75°, preferably between 50° and 70°, and suitably about 60°.

5. A saw blade according to any of claims 1 to 4, **characterized in that** said first and second teeth are unset and unswaged.

6. A saw blade according to claim 5, **characterized in that** the blade is completely void of set or swaged teeth.

## Patentansprüche

1. Bandsägeblatt mit Zähnen, mit einer Zahnspitze mit einer Zahnkante (E1, E2), einer Zahnfläche auf der Vorderseite des Zahns wie in der Sägerichtung gesehen, einer Zahnrückseite hinter der Zahnkante, und einer Zahnunterseite zwischen der Zahnfläche auf jedem Zahn und der Zahnrückseite auf dem nächsten Zahn vor jedem Zahn, und Zahnlücken, wobei eine Zahnlücke (G1, G2) definiert ist als der Raum zwischen den Zahnkanten zweier benachbarter Zähne, wobei das Sägeblatt zwei ebene Seiten aufweist, eine rechte Seite (R) und eine linke Seite (L), wenn das Sägeblatt schräg von oben in der Sägerichtung gesehen wird, wobei sich die Zahnkante (E1, E2) zwischen einer rechten Zahnkante (A1, A2) und einer linken Zahnkante (B1, B2) in Bezug auf die Betrachtungsrichtung erstreckt,
wobei
das Sägeblatt in einem Bereich einer ersten Zahnlücke zwischen der Zahnkante (E1) eines ersten Zahns (T1) und der Zahnkante (E2) des nächsten Zahns (T2) vor dem ersten Zahn in einem stumpfen Winkel in Richtung auf die linke Seite (L) des Sägeblatts abgeschrägt ist, wobei ein abgeschrägter Bereich mit einer abfallenden Fläche (S 1) gebildet wird;
der abgeschrägte Bereich mit der abfallenden Fläche (S1) sich von einer ersten Zahnkante (E1) im hinteren Ende der ersten Zahnlücke die Zahnfläche herunter und bis mindestens zu der Zahnunterseite erstreckt;
der Bereich, der auf der rechten Seite durch eine erste Linie (K1) begrenzt wird, die sich von einem hinteren Fußpunkt, der durch die rechte Zahnkante (A1) auf der ersten Zahnkante (E1) oder durch einen Punkt (A1') auf der ersten Zahnkante definiert wird,
wobei der Punkt näher an der rechten Zahnecke (A1) liegt als an der linken (B1), bis zu einem Fußpunkt (C, C') erstreckt, der in dem Bereich der ersten Zahnlücke an die linke Seite des Sägeblatts angrenzt oder ein Punkt auf der Zahnkante (E2) auf dem nächsten Zahn (T2) vor dem ersten Zahn ist, wodurch eine erste longitudinale Schneidkante (X1) gebildet wird, die an dem hinteren Fußpunkt beginnt, und der Bereich an der linken Seite durch die Grenzlinie gegen die linke ebene Seite des Sägeblatts, und vorne von der ersten Linie (K1) und/oder der Zahnkante (E2) des nächsten Zahns (T2) abgegrenzt wird, wenn der vordere Fußpunkt der ersten Linie auf der nächsten Zahnkante liegt;
dass das Sägeblatt in einem Bereich einer zweiten Zahnlücke (G2) zwischen einer zweiten Zahnkante und einem nächsten Zahn vor dem zweiten Zahn in der gleichen Weise abgeschrägt ist wie in der ersten Zahnlücke, aber stattdessen nach rechts, wodurch eine zweite longitudinale Schneidkante (X2) gebildet wird, die an dem hinteren Fußpunkt beginnt;
und dass das Sägeblatt in dem Bereich der ersten und der zweiten Zahnlücken zwischen ersten oder zweiten Zähnen einerseits und Zähnen davor andererseits entlang der Länge des Sägeblatts in der gleichen Art abwechselnd nach links und nach rechts in den ersten und zweiten Zahnlücken abgeschrägt ist.

2. Sägeblatt nach Anspruch 1, **dadurch gekennzeichnet, dass** die Zahnflächen (F1, F2) konkav sind, und dass die Zahnrückseiten (H1, H2) in den ersten und zweiten Zahnlücken konvex sind und die Zahnkante (E1, E2) vor dem hintersten Punkt der konkaven Zahnfläche (F1, F2) liegt.

3. Sägeblatt nach Anspruch 1, **dadurch gekennzeichnet, dass** der stumpfe Winkel der abgeschrägten Sägeblattoberfläche mit der Seite des Sägeblatts zwischen 105° und 145° liegt, bevorzugt zwischen 110° und 130°, und geeigneterweise etwa 120° beträgt.

4. Sägeblatt nach Anspruch 3, **dadurch gekennzeichnet, dass** der Kantenwinkel der longitudinalen Kante zwischen 45° und 75° liegt, bevorzugt zwischen 50° und 70°, und geeigneterweise etwa 60° beträgt.

5. Sägeblatt nach irgendeinem der Ansprüche 1 bis 4, **dadurch gekennzeichnet, dass** die ersten und die zweiten Zähne ungeschränkt und ungestaucht sind.

6. Sägeblatt nach Anspruch 5, **dadurch gekennzeichnet, dass** das Blatt vollständig frei von geschränkten oder gestauchten Zähnen ist.

## Revendications

1. Lame de scie en bande avec des dents ayant un point de dent avec un bord de dent (E1, E2), une face de dent sur le côté frontal de la dent, vu dans la direction de sciage, un dos de dent derrière le bord de dent, et un fond de dent entre la face de dent sur chaque dent et le dos de dent sur la dent suivante située devant la dent considérée, et des cavités de dent ; lame dans laquelle une cavité de dent (G1, G2) est définie comme l'espace entre les bords de dent de deux dents adjacentes, ladite lame de scie ayant deux côtés plans ; un côté droit (R) et un côté gauche (L) lorsque la lame de scie est regardée obliquement depuis le dessus dans la direction de sciage, lequel bord de dent (E1, E2) s'étend entre un coin droit de dent (A1, A2) et un coin gauche de dent (B1, B2) en référence à ladite direction de vue,
dans laquelle
la lame de scie, dans une région d'une première cavité de dent entre le bord de dent (E1) d'une première dent (T1) et le bord de dent (E2) de la dent suivante (T2) située devant ladite première dent, est biseautée selon un angle obtus vers le côté gauche (L) de la lame de scie, formant une région biseautée avec une surface en pente (S1),
ladite région biseautée avec ladite surface en pente (S1) s'étendant depuis un premier bord de dent (E1) dans l'extrémité arrière de la première cavité de dent, vers le bas en direction de la face de dent et au moins jusqu'au fond de dent,
ladite région étant bordée vers la droite par une première ligne (K1) qui s'étend depuis un point arrière de pied défini par le coin droit de dent (A1) sur le premier bord de dent (E1) ou par un point (A1') sur le premier bord de dent, lequel point est plus proche du coin droit de dent (A1) que le coin gauche de dent (B1), vers un point avant de pied (C, C') qui borde le côté gauche de la lame de scie dans la région de la première cavité de dent ou est un point situé sur le bord de dent (E2) sur la dent suivante (T2) devant ladite première dent, formant de ce fait une première longitudinale arête en lame de couteau (X1) à partir du point arrière de pied,
et ladite région étant bordée vers la gauche par la ligne de frontière contre le côté plan gauche de la lame de scie, et vers l'avant par ladite première ligne (K1) et/ou par le bord de dent (E2) de ladite dent suivante (T2) lorsque le point avant de pied de ladite première ligne s'étend sur ledit bord de dent suivant ;
la lame de scie, dans une région d'une deuxième cavité de dent (G2) située entre une deuxième dent et une dent suivante devant ladite deuxième dent, étant biseautée de la même manière que dans la première cavité de dent mais au contraire vers la droite, formant de ce fait une deuxième arête longitudinale en lame de couteau (X2) à partir du point arrière de pied,
et la lame de scie, dans la région de la première et de la deuxième cavités de dent entre la première ou la deuxième dents, d'une part, et les dents situées en avant de celles-ci, d'autre part, sur la longueur de la lame de scie, sont biseautées selon le mode alternatif précité vers la gauche et vers la droite dans lesdits première et deuxième cavités de dent.

2. Lame de scie selon la revendication 1, **caractérisée en ce que** les faces de dent (F1, F2) sont concaves, et **en ce que** les dos de dent (H1, H2) dans lesdites première et deuxième cavités de dent sont convexes et le bord de dent (E1, E2) s'étend en avant du point situé le plus vers l'arrière de la face concave de dent (F1, F2).

3. Lame de scie selon la revendication 1, **caractérisée en ce que** l'angle obtus former par la surface biseautée de lame de scie avec le côté de la lame de scie est compris entre 105° et 145°, de préférence entre 110° et 130°, et avantageusement de l'ordre de 120°.

4. Lame de scie selon la revendication 3, **caractérisée en ce que** l'angle de bord du bord longitudinal est compris entre 45° et 75°, de préférence entre 50° et 70°, et avantageusement de l'ordre de 60°.

5. Lame de scie selon l'une quelconque des revendications 1 à 4, **caractérisée en ce que** ladite première et deuxième dents ne sont pas à dépouille latérale et ne sont pas étampées.

6. Lame de scie selon la revendication 5, **caractérisée en ce que** la lame est complètement exempte de dents à dépouille latérale ou de dents étampées.
